# EUROPEAN PATENT SPECIFICATION

(11) **EP 0 333 203 B1**
(45) Date of publication and mention of the grant of the patent: **14.06.1995**
(21) Application number: 89104772.2
(22) Date of filing: 17.03.1989
(51) Int. Cl.: G02B 6/00, G02B 5/02, G02B 3/08, F21V 8/00

(54) **Apparatus for establishing a predetermined illumination pattern**
Vorrichtung zur Erzeugung bestimmter Beleuchtungsmuster
Dispositif pour établir une illumination d'une forme prédéterminée

(30) Priority: 18.03.1988 JP 63400/88; 05.04.1988 JP 82323/88; 06.04.1988 JP 83127/88
(43) Date of publication of application: 20.09.1989
(73) Proprietor: Dainippon Screen Mfg. Co., Ltd., Kamikyo-ku Kyoto 602 (JP)
(72) Inventor: Sasada, Shigeru Dainippon Screen Mfg. Co., Ltd., Horikawa-dori Kamikyo-ku Kyoto 602 (JP)
(74) Representative: Goddar, Heinz J., Dr.

(56) References cited:
- EP-A- 0 235 447
- DE-A- 1 959 740
- JP-U- 5 763 321
- US-A- 4 052 120
- US-A- 4 561 043
- US-A- 4 797 711

## Description

The present invention relates to an apparatus for establishing a predetermined illumination pattern according to the introductory part of the main claim.

### Description of Prior Art

From the documents DE-OS 1 959 740, US-A 4 797 711 and US-A 4 561 043 rod shaped light sources are known. In all documents a transparent rod member having two end faces and reflecting means at one end face and diffusing means provided at the outer periphery of said rod and refracting means, i.e. a curved surface opposing the diffusing means are shown.

Especially document US-A 4 797 711 has, however, the disadvantage, that the luminous fluxes emitted from the rod are dispersed. Similar deficiencies have been noted in the apparatus described in DE-OS 1 959 740.

Rod shaped linear light diffusion apparatuses have been well known. Fig. 1A is a schematic diagram showing a structure of such a conventional rod shaped linear light diffusion apparatus.

Referring to Fig. 1A, the conventional rod shaped linear light diffusion apparatus 1 comprises a rod 2 for transmitting light emitted from a light source 4 through a reflecting plate 5 and for diffusing the light at desired portions, a diffused reflection layer 3 formed on the surface of the rod 2 and a reflecting mirror 6 provided on an end portion opposing to the light entering side of the rod 2. The diffused reflection layer 3 is formed by coating the surface of the rod 2 with a silicon rubber including suspended white minute powder of a material having high refractive index such as titanium, potassium titanate or zinc oxide. The light transmitted from one end of the rod 2 is diffused when it encounters to the diffused reflection layer 3. By appropriately thickening the diffused reflection layer 3, most of the light is diffused to the inside of the rod 2. The light transmitted without encountering the diffused reflection layer 3 is reflected by the reflecting mirror 6 provided at the end of the rod 2 to be returned to the inlet side of the rod 2.

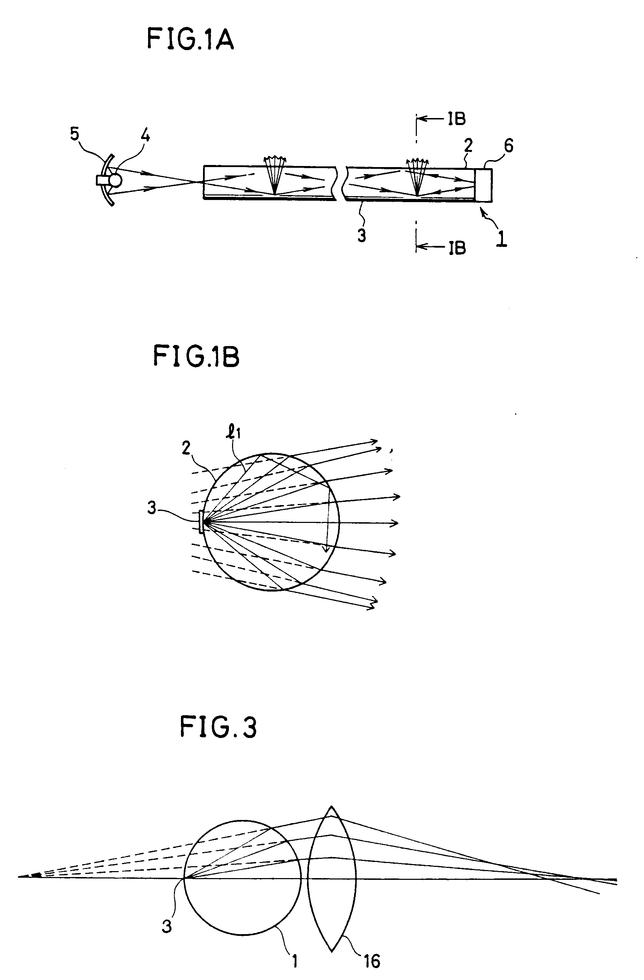

Fig. 1B is a cross sectional view of a portion taken along the line IB-IB of the rod 2 shown in Fig. 1A. Luminous fluxes which have reached the diffused reflection layer 3 are irregularly reflected. Out of the irregularly reflected luminous fluxes, a luminous flux 1 incident to the periphery of the rod 2 with an angle larger than a critical angle is totally reflected at the periphery of the rod and it is continuously reflected in the rod 2 until it encounters the diffused reflection layer 3 again. Meanwhile, luminous fluxes incident to the periphery of the rod 2 at an angle smaller than the critical angle are refracted at the periphery to be radiated externally, so that luminous fluxes having directivity are emitted from the rod 2.

An example of such a rod shaped linear light diffusion apparatus which reflects light having directivity used as a light source for color separation scanning for an image scanning apparatus, such as facsimile, is disclosed in, for example, United States Patent No. 4,797,711, which is incorporated herein by reference.

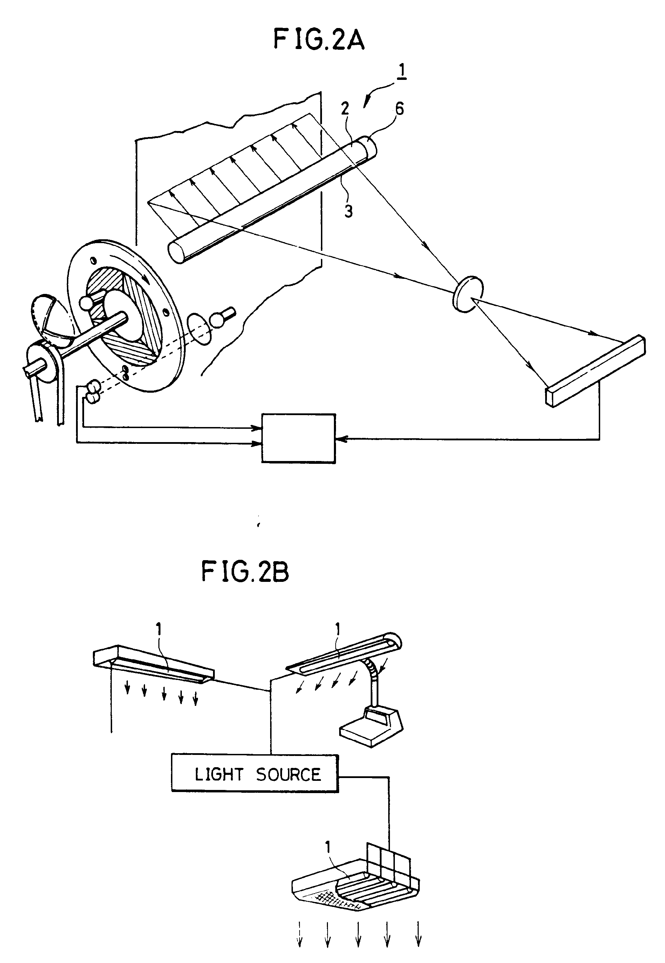

Fig. 2A is a perspective view of a main portion of the facsimile to which the rod shaped linear light diffusion apparatus disclosed in the aforementioned patent is applied. The application of the rod shaped linear light diffusion apparatus, which can be used as the above mentioned linear light source, is not limited to the linear light source of a copying machine, facsimile or the like.

Fig. 2B shows another application of the rod shaped linear light diffusion apparatus 1 used as the linear light source. As shown in Fig. 2B, the rod shaped linear light diffusion apparatus 1 used as a linear light source may be used as an illuminating apparatus such as a table lamp, floor lamp, ceiling lamp etc. when it is connected to an ordinary light source even, for example, solar radiation.

The rod shaped linear light diffusion apparatus 1 used as a linear light source has superior advantages of little heat radiation, approximately uniform distribution of intensity of irradiation over the longitudinal direction of the rod and ready maintenance such as readiness in changing the rod and the like. However, it has a disadvantage of low efficiency of irradiation as the luminous fluxes emitted therefrom are dispersed, as shown in Fig. 1B.

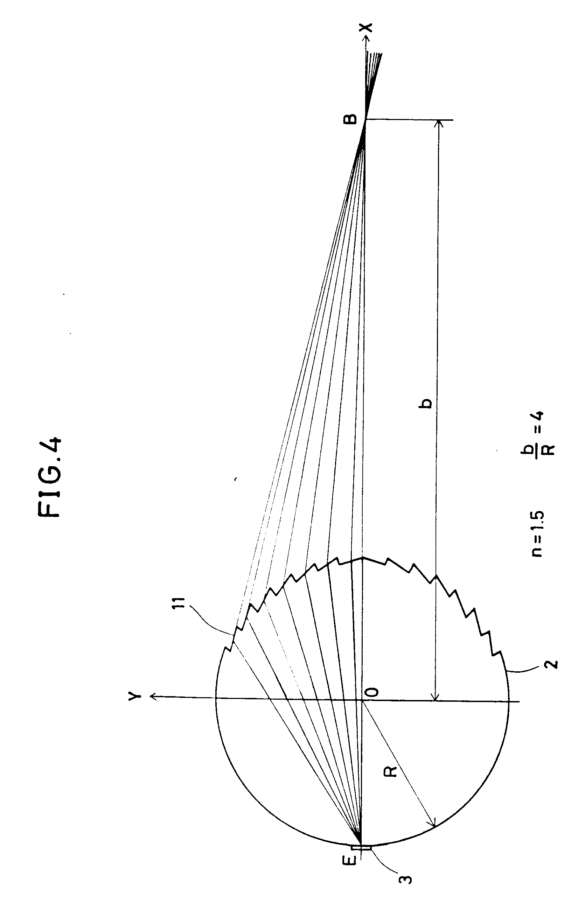

Fig. 3 shows a cylindrical condenser lens 16 provided behind the rod shaped linear light diffusing apparatus 1 to solve the above described problem.

By the provision of the lens, the dispersed luminous fluxes are condensed. However, as shown in Fig. 3, the luminous fluxes emitted from the rod shaped linear light diffusing apparatus 1 are not radiated from one point. As shown by the dotted lines, each optical path intersects with the optical axis at different points. Therefore, the luminous fluxes cannot be converged to one point by means of the cylindrical lens 16. Now, if a region to be irradiated is not linear but wide in a direction orthogonal to the axis of the rod shaped linear light diffusion apparatus, it is desired that a constant illuminance is maintained regardless of the change of distance between the surface to be irradiated and the rod shaped linear light diffusion apparatus 1. In such case, the luminous fluxes radiated from the rod shaped linear light diffusion apparatus 1 must be made parallel fluxes. However, it is difficult to provide parallel luminous fluxes by the conventional rod shaped linear light diffusion apparatus, as described above.

The illuminance of the luminous fluxes radiated from the conventional rod shaped linear light diffusion apparatus 1 is higher at the central portion and lower at the opposing end portions. Namely, the distribution of illuminance is not uniform. Therefore, a region having a prescribed area cannot be uniformly illuminated.

### SUMMARY OF THE INVENTION

Therefore, it is an object of the present invention, which is defined in claim 1, to establishe a predetermined illumination pattern in line-shaped diffusion means, whereby uniform distribution of illuminance in a transparent line shape linear light diffusion apparatus shall be made possible.

The above described object of the present invention can be attained with an apparatus according to claim 1. The dependent claims 2 - 5 describe advantageous embodiments of the invention, the features of the saw tooth shaped grooves are further defined, and in which condensing light can be obtained, parallel light can be obtained and in which a specific advantageous angle is further described.

Since the rod shaped linear light diffusion apparatus comprises the above described components, the incident light entering from the longitudinal direction is diffused to a direction having a prescribed relation with the direction of the optical axis intersecting the longitudinal direction, and the direction having the prescribed relation can be arbitrarily selected. Therefore, desired luminous fluxes can be obtained in the rod shaped linear light diffusion apparatus.

The diffusing member comprises a plurality of saw tooth shaped grooves and the plurality of saw tooth shaped grooves are formed such that the diffused light are refracted in a direction toward a prescribed one point. Therefore, the diffused reflected light is linearly condensed along the longitudinal direction at a position on the optical axis spaced apart by a prescribed distance from the rod shaped linear light diffusion apparatus. Consequently, luminous fluxes which can be linearly condensed can be provided by the rod shaped linear light diffusion apparatus.

The plurality of saw tooth shaped grooves are formed such that the diffused light are diffused in parallel in the axial direction. Therefore, the diffused reflected light is diffused in parallel to the direction of the optical axis of the rod shaped linear light diffusion apparatus. Consequently, parallel luminous fluxes can be obtained by a rod shaped linear light diffusion apparatus.

The light diffused by the diffusing member is used as an illuminating light having a prescribed illuminance, and the plurality of saw tooth shaped grooves are formed such that the illuminance of the diffused light on a surface intersecting the optical axis is made uniform. Therefore, the diffused reflected light has a constant illuminance on a surface intersecting the optical axis of the rod shaped linear light diffusion apparatus. Consequently, the distribution of illuminance can be made uniform in a rod shaped linear light diffusion apparatus.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1A is a schematic diagram showing a conventional rod shaped linear light diffusion apparatus;
Fig. 1B is a cross sectional view of a portion shown by IB-IB of Fig. 1A;
Fig. 2A is a perspective view of a main portion of a facsimile to which the present invention is applied;
Fig. 2B is a schematic diagram of an illuminating apparatus to which the present invention is applied;
Fig. 3 shows one example of means for solving the problem of the prior art;
Figs. 4 and 5 illustrate a first embodiment of a rod shaped linear light diffusion apparatus in accordance with the present invention capable of linearly condensing light;
Figs. 6 to 10 illustrate a further example of a rod shaped linear light diffusion apparatus capable of linearly condensing light;
Figs. 11 to 14 illustrate a further example of a rod shaped linear light diffusion apparatus capable of linearly condensing light;
Fig. 15 is a schematic diagram of the rod shaped linear light diffusion apparatus capable of providing parallel luminous fluxes in accordance with the present invention; and
Figs. 16 to 19 illustrate a rod shaped linear light diffusion apparatus capable of providing uniform distribution of illuminance in accordance with the present invention.

### DESCRIPTION OF THE PREFERRED EMBODIMENTS

The desired luminous fluxes in accordance with the present invention comprises luminous fluxes which can be linearly condensed, parallel fluxes, and luminous fluxes capable of providing uniform distribution of illuminance. The rod shaped linear light diffusion apparatuses capable of providing respective luminous fluxes will be described in the following.

### (1) A Rod Shaped Linear Light Diffusion Apparatus Capable of Linearly Condensing Light

the transparent rod shaped linear light diffusion apparatus capable of linear condensing of the light in accordance with the present invention comprises the following preferable embodiments.

### (i) Embodiment Capable of Linearly Condensing Light

Fig. 4 shows a first embodiment of the transparent rod shaped linear light diffusion apparatus capable of linearly condensing light in accordance with the present invention, which corresponds to Fig. 1B. Referring to Fig. 4, a diffused reflection layer 3 is formed at the point E on the outer periphery of the rod 2 and a plurality of saw tooth shaped grooves 11 are formed on the peripheral surface opposing to the diffused reflection layer 3 of the rod 2. Although a plurality of saw tooth shaped grooves are formed on the outer periphery of the rod in Fig. 4, it is not necessary for the grooves to be formed on the outer periphery of the rod. For example, a member with a plurality of saw tooth shaped grooves can be attached to a member with a prism section, thereby to form a rod with a plurality of saw tooth shaped grooves. The light reflected at the point E at the outer peripheral surface of the rod 2 is diffused in a prescribed direction by the saw tooth shaped grooves 1 to be condensed on the point B on an X axis passing through the center O of the rod 2.

In this case, the refractive index n of the rod 2 is 1.5 and b/R = 4.

In Fig. 4, the reference character b represents a distance from the center O of the rod 2 to the condensing point B and the reference character r represents the radius of the rod 2.

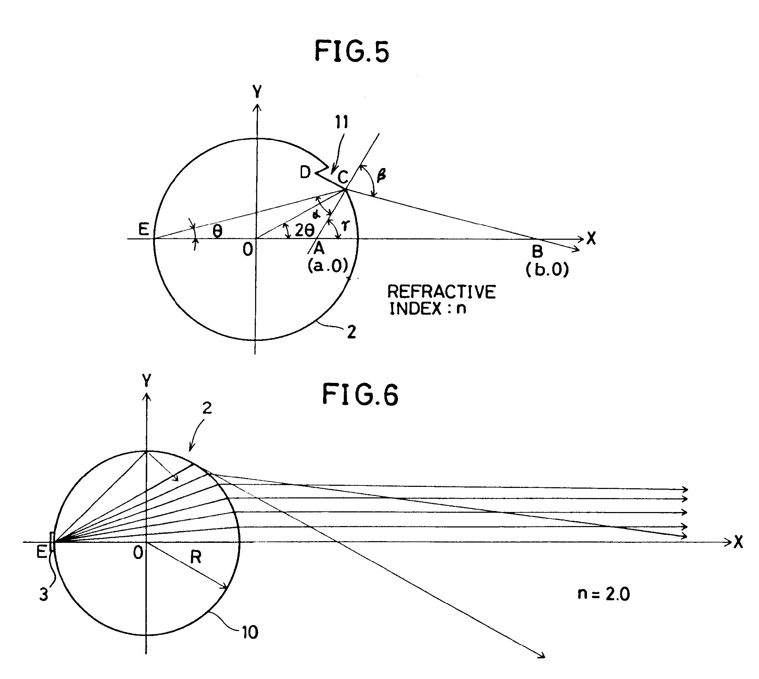

The principle of condensing the luminous fluxes by the saw tooth shaped grooves 11 of the rod 2 will be described with reference to Fig. 5.

A plurality of saw tooth shaped grooves are formed along the longitudinal direction of the rod 2 at the peripheral surface of the rod 2 opposing to the point E. However, only one groove 11 is shown in Fig. 5 for the purpose of facilitating understanding of the principle.

Now, the respective reference characters represent the following items.
point A: an intersection of a normal of a CD surface at the point of C and the X axis, with the coordinate value being (a, 0)
point B: an intersection of a refracted luminous flux and the X axis with the coordinate value being (b, 0)
point C: refracting point of the luminous flux
   CD: surface of the groove 11
   ϑ: angle of the luminous flux reflected from the point E with the X axis
   α: incident angle of the luminous flux at the CD surface
   β: angle of irradiation of the luminous flux at the CD surface
   γ: angle of the line CA with the X axis
   n: refractive index of the rod

the following relations can be applied.$\text{nsinα = sinβ}$$\text{γ = α + ϑ ∴α = γ - ϑ}$$\text{sinβ = sin{(β-γ)+γ}} \text{= sin(β-γ)cosγ + cos(β-γ)sinγ}$
at ΔOCB,$\text{∠CBO = β - γ}$
by applying the sine theory at ΔBCO,$\frac{\text{R}}{\text{sin(β-γ)}} \text{=} \frac{\sqrt{\text{(b - Rcos2ϑ)² + R²sin²2ϑ}}}{\text{sin2ϑ}}$
assuming that$\text{sin(β-γ) =} \frac{\text{Rsin2ϑ}}{\sqrt{\text{b² - 2bRcos2ϑ + R²}}} \text{= K, then cos(β-γ) =} \sqrt{\text{1 - K²}}$
from the equations (1), (2) and (3),$\text{nsin(γ-ϑ) - Kcosγ + sinγ} \sqrt{\text{1-K²}}$$\text{nsinγcosϑ - ncosγsinϑ = Kcosγ + sinγ} \sqrt{\text{1-K²}}$$\text{ncosϑtanγ - nsinϑ = K + tanγ} \sqrt{\text{1-K²}}$$\text{(ncosϑ -} \sqrt{\text{1-K²}} \text{)tanγ = K + nsinϑ}$$\text{∴tanγ =} \frac{\text{nsinϑ + K}}{\text{ncos ϑ -} \sqrt{\text{1-K²}}}$

The angle γ of the surface of each of the saw tooth shaped grooves 11 by which the value of the distance b is made constant can be determined from the angle of reflection ϑ of the luminous flux from the point E, the refractive index n of the rod 2, the radius r of the rod and the distance b to the point of condensing the luminous flux. If the grooves 11 are formed at the positions determined by the angle γ, the luminous fluxes reflected from the point E are all condensed to the point B on the X axis as shown in Fig. 4, whereby a rod shaped linear light diffusion apparatus illuminating a linear region can be provided. In the embodiment shown in Fig. 4, the refractive index n of the transparent rod 2 = 1.5 and b/r = 4, and the increment of the angle of reflection ϑ of the luminous fluxes from the point E is 5°. The increment of the angle ϑ may be arbitrarily set at smaller value as needed.

### (ii) Further Example of a Rod Shaped Linear Light Diffusion Apparatus Capable of Linearly Condensing Light

The linear condensing of light is effected by forming the rod with a material having the refractive index higher than 2.

Fig. 6 is a cross sectional view showing light paths of a transparent rod shaped linear light diffusion apparatus 1 formed of a material having the refractive index of 2. Referring to Fig. 6, the light reflected by the diffused reflection layer 3 formed on a point E at the outer peripheral surface of the rod 10 is reflected on the outer peripheral surface of the rod 10, and the reflected light is converged on the X axis passing through the center O of the rod 10 at some distance from the center O.

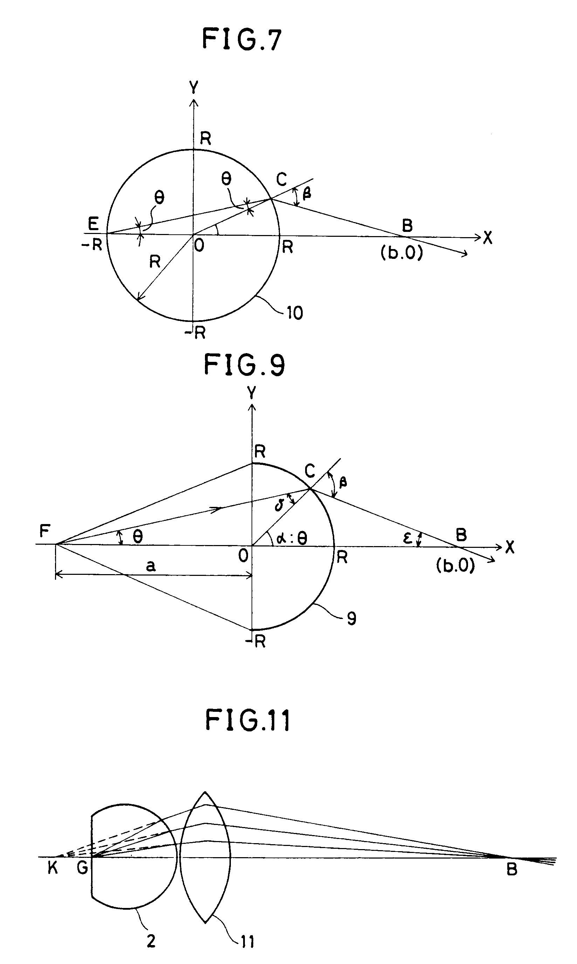

Fig. 7 illustrates the reason why the luminous fluxes are condensed by the rod 10 formed of a material having the refractive index of 2 such as shown in Fig. 6.

Fig. 7 shows a transparent rod 2 having a circular cross section of a radius R. On an X-Y coordinate system with the center O being the origin, the light is reflected at the angle of ϑ with the axis X from an intersecting point E of the X axis and the periphery, and the light is refracted at the point C and intersects with the X axis at the point B.

When the angle of the line BC and the radius line OC is represented by β and the refractive index is represented by n, the following relation can be applied.$\text{nsinϑ = sinβ}$

Since the coordinate value of the point C is (Rcos2ϑ, Rsin2ϑ), the line BC can be represented by the following equation.$\text{Y = -tan(β-2ϑ)(X - Rcos2ϑ) + Rsin2ϑ}$

Assuming that the coordinate value of the point B is (b, 0), the value b can be calculated in the equation (5) with X = b, Y = 0.$\text{0 = -tan(β-2ϑ)(b - Rcos2ϑ) + Rsin2ϑ}$$\text{b = Rcos2ϑ +} \frac{\text{Rsin2ϑ}}{\text{tan(β-2ϑ)}}$$\text{∴} \frac{\text{b}}{\text{R}} \text{=} \frac{\text{sin(β-2ϑ)cos2ϑ + cos(β-2ϑ)sin2ϑ}}{\text{sin(β-2ϑ)}} \text{=} \frac{\text{sinβ}}{\text{sin(β-2ϑ)}} \text{=} \frac{\text{nsinϑ}}{\text{sinβcos2ϑ - cosβsin2ϑ}} \text{=} \frac{\text{nsinϑ}}{\text{nsinϑcos2ϑ - 2sinϑcosϑ} \sqrt{\text{1 - n²sin²ϑ}}} \text{=} \frac{\text{1}}{\text{cos2ϑ - 2cosϑ} \sqrt{\frac{\text{1}}{\text{n²}} \text{- sin²ϑ}}}$

To make b ≧ R, the following inequality should be satisfied.$\text{0 ≦ cos2ϑ - 2cosϑ} \sqrt{\frac{\text{1}}{\text{n²}} \text{- sin²ϑ}} \text{≦ 1}$

In order to satisfy the former part of the inequality$\text{(I) 0 ≦ cos2ϑ - 2cosϑ} \sqrt{\frac{\text{1}}{\text{n²}} \text{- sin²ϑ,}}$
then$\text{0 ≦ 2cosϑ} \sqrt{\frac{\text{1}}{\text{n²}} \text{- sin²ϑ}} \text{≦ cos2ϑ}$$\text{∴4cos⁵ϑ (} \frac{\text{1}}{\text{n²}} \text{- sin²ϑ) ≦ (2cos²ϑ - 1)²}$$\text{4} \frac{\text{1}}{\text{n²}} \text{cos²ϑ - 4cos²ϑ + 4cos⁴ϑ ≦ 4cos⁴ϑ - 4cos⁴ϑ + 1}$$\text{∴ n² ≧ 4cos²ϑ}$$\text{n ≧ 1 cosϑ ≧ 0 ∴n≧ 2cosϑ}$
Namely, when n ≧ 2, b ≧ R regardless of the value of ϑ so that the luminous fluxes are condensed.

When n < 2, then b < 0 provided that cosϑ > n/2, so that the reflected luminous fluxes are diffused.

In order to satisfy the latter part of the inequality$\text{(II) cos2ϑ - 2cosϑ} \sqrt{\frac{\text{1}}{\text{n²}} \text{- sin²ϑ}} \text{≦ 1,}$
when the inequality is transformed,$\text{-2sin²ϑ - 2cosϑ} \sqrt{\frac{\text{1}}{\text{n²}} \text{- sin²ϑ}} \text{≦ 1}$

The equation is always capable of being established regardless of the value of ϑ.

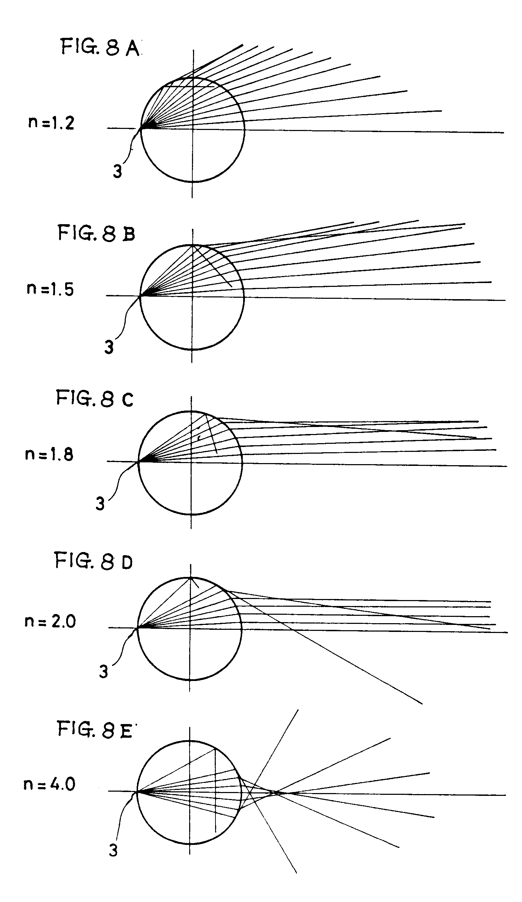

Figs. 8A to 8E show optical paths when the rods are formed of transparent materials having different refractive indices n. When n < 2, the luminous fluxes reflected from the linear diffused reflection layer 3 on the peripheral surface are diffused. However, as the value of n increases, the luminous fluxes are tend to be condensed, and when n ≧ 2, the luminous fluxes are condensed to a narrow range.

In order to obtain condensing luminous fluxes by using a rod shaped linear light diffusion apparatus, a cylindrical rod may be formed with a transparent material whose refractive index (n) is higher than 2. Examples of such materials having high refractive indices and the wavelength of the light are shown in the following table.

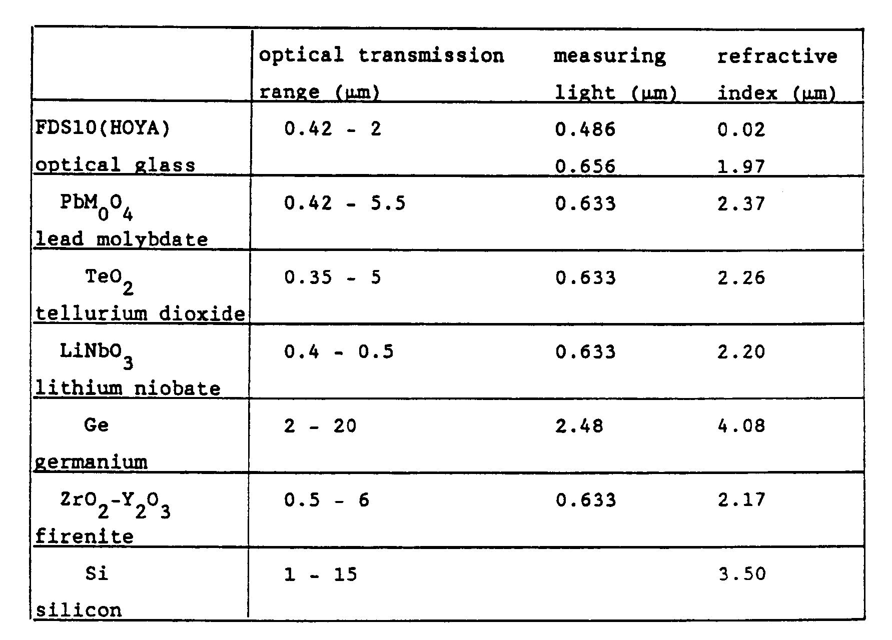

FDS10(HOYA) may be used as a material having the refractive index of 2, PbM₀O₄ and TeO₂ may be used as the materials having the refractive index higher than 2 and Ge may be used as a material having the refractive index of 4.

As shown in the table, Ge transmits light of the infrared region having the wavelength of 2 to 20 »m. Therefore, by condensing the infrared light by means of a cylindrical rod formed of germanium, the cylindrical rod may be used as a linear heat source.

### (Modification of the Second Example)

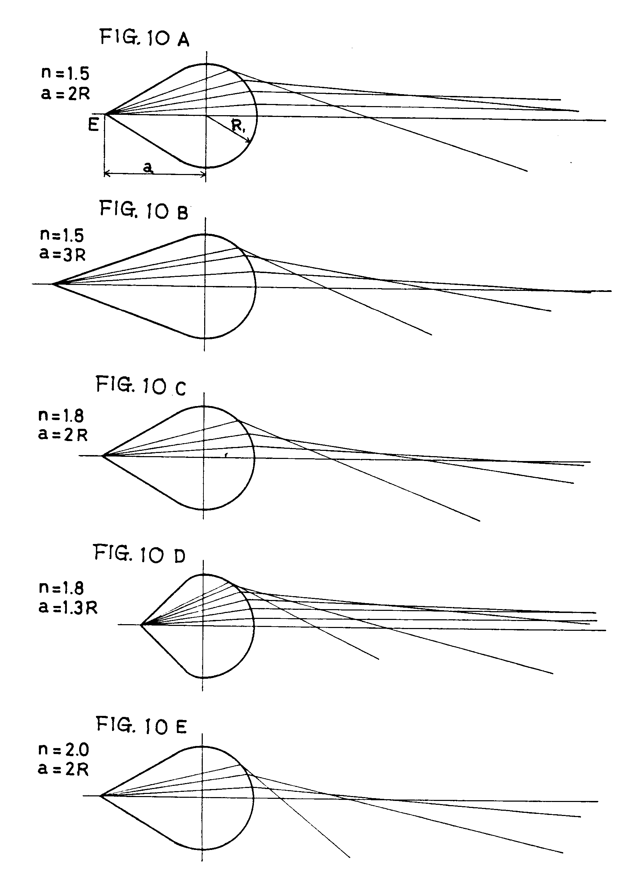

In a modification of the second example, the cross sectional shape of the rod is not a perfect circle but a combination of a triangle and a semicircle, as shown in Fig. 9. The distance a between the center O of the semicircular portion and the linear diffused reflection layer E serving as a light emitting portion is selected to be larger than the radius R of the semicircular portion. In this case also, condensing luminous fluxes can be provided by using a conventional rod formed of a transparent material having lower refractive index.

Fig. 9 shows a cross section of a rod 13 which is, in the right side of the Y axis, a semicircle having the radius of R and in the left side an isosceles triangle whose vertex is a point F (coordinate value: (-a, 0)) which is spaced apart from the center O by a distance (a) (a > r). If the angle of reflection from the point F with the X axis is represented by ϑ, the intersecting point of the optical path of the light beam refracted at the point C on the peripheral surface of the semicircle with the X axis is represented by B, the incident angle at the point C is represented by δ, the angle of irradiation is represented by β and the angle of intersection of the refracted light with the X axis is represented by ε, then$\text{ε = β - (δ + ϑ)}$$\text{nsinδ = sinβ}$$\frac{\text{R}}{\text{sinϑ}} \text{=} \frac{\text{-a}}{\text{sinδ}}$$\text{∴sin δ = -} \frac{\text{a}}{\text{R}} \text{sinϑ}$$\text{cosδ =} \sqrt{\text{1 -} \frac{\text{a²}}{\text{R²}} \text{sin²ϑ}}$$\text{sinβ = -} \frac{\text{a n}}{\text{R}} \text{sinϑ}$$\text{cosβ =} \sqrt{\text{1 -} \frac{\text{a²n²}}{\text{R²}} \text{sin²ϑ}}$

The condition of intersection of the optical path BC with the X axis is ε ≧ 0, namely, sinε ≧ 0.$\text{sinε = sin{β - (δ + ϑ)}} \text{= sinβ(cosδcosϑ - sinδsinϑ) - cosβ(sinδcosϑ + cosδsinϑ)} \text{=} \frac{\text{a²n²}}{\text{R²}} \text{sinϑ{cosϑ} \sqrt{\frac{\text{R²}}{\text{a²}} \text{- sin²ϑ}} \text{- sin²ϑ - cosϑ} \sqrt{\frac{\text{R²}}{\text{a²n²}} \text{- sin²ϑ}} \text{-} \sqrt{\text{(} \frac{\text{R²}}{\text{a²}} \text{- sin²ϑ)(} \frac{\text{R²}}{\text{a²n²}} \text{- sin²ϑ)}}}$

The terms in { } must be no less than zero (≧ 0) in order to make the value sinε ≧ 0.

By solving this inequality,$\frac{\text{a}}{\text{R}} \text{≦} \frac{\text{-1}}{\sqrt{\text{n² - 2ncosϑ + 1}}}$

In order to condense the luminous fluxes regardless of the value of ϑ, the following inequality should be satisfied.$\frac{\text{a}}{\text{R}} \text{≦ -} \frac{\text{1}}{\text{n - 1}}$

For example, when a transparent material whose refractive index n = 1.5, all luminous fluxes can be irradiated to be condensed by setting a ≦ -2R. In this case, however, the position of the intersecting point B of the luminous flux on the X axis changes in accordance with the difference of the angle ϑ of reflection, so that the linearly condensed state cannot be provided. Figs. 10A to 10E schematically show optical paths when the refractive index n of the rod and the distance a between the center of the rod and the light emitting portion are variously changed. In these examples, the luminous fluxes are not linearly condensed.

If, n = 2.0, then a ≦ -R, which corresponds to the above described rod having circular cross section.

The respective rods shown in Figs. 10A to 10E may be utilized as linear light sources for illuminating a region of a prescribed with. By appropriately selecting the values of n and a, the distribution of illuminance of the rods in the width region to be irradiated can be adapted to meet the desired conditions.

### (iii) Third Example of a Transparent Rod Shaped Linear Light Diffusion Apparatus Capable of Linearly Condensing Light.

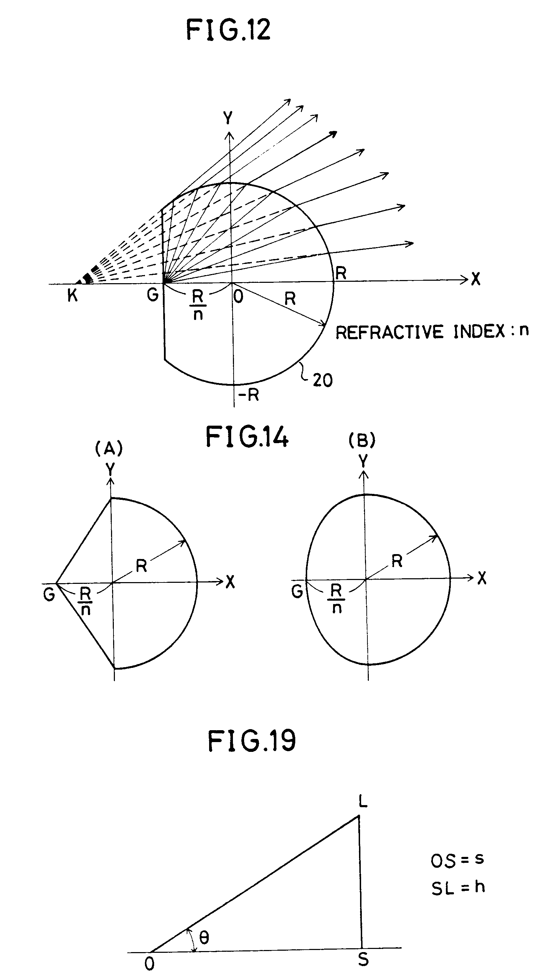

Fig. 11 illustrates a further example of a rod 2 with a portion of the cylinder cut and a condenser lens 17 such as a cylindrical lens or a linear Fresnel lens are arranged adjacent to each other on an optical axis. The luminous fluxes refracted at the diffused reflection layer 3 formed at the portion represented by G of the rod 2 are condensed by the condenser lens 17 to be condensed on the point B of the optical axis of the condenser lens 17.

In order to condense the luminous fluxes at the point B as shown in Fig. 11, the light reflected from the point G must be diffused from one point K on a line passing through the points O-G, as shown by the dotted lines in Fig. 12. In order to realize this state, the position G of the diffused reflection layer must be set at a distance R/n from the center O. The reason for this will be described in the following.

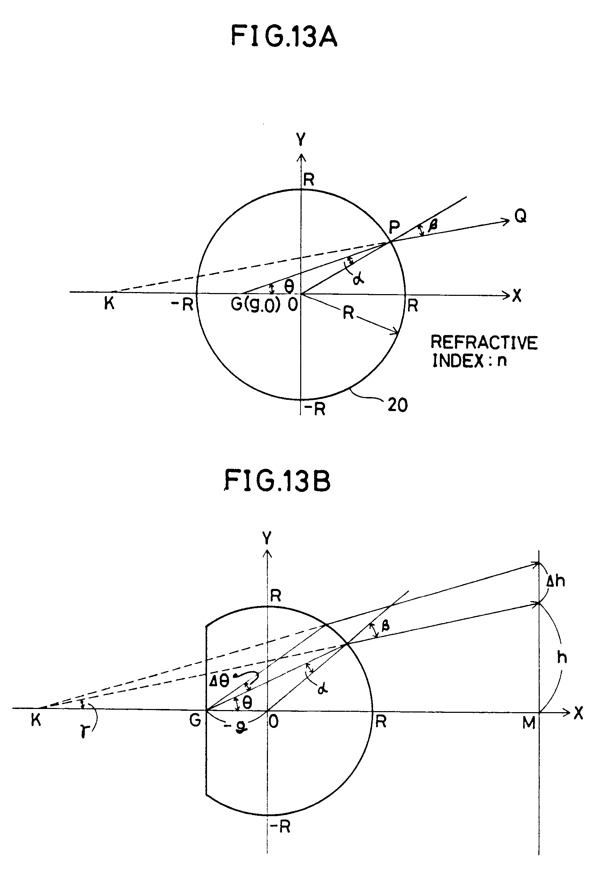

Fig. 13A is a cross sectional view of a cylindrical rod having a refractive index of n and a radius of R.

Let us assume an X-Y coordinate system with the center O of the rod 20 being the origin, and the optical path is reflected from a point G (coordinate value (g, 0)) on the X axis and is refracted at the point P on the peripheral surface to be reflected in the direction Q. When an intersecting point of the X axis and a line passing through the points P and Q shown by the dotted line is represented by K, ∠APO = α,∠KPO = β and ∠PAO = ϑ, then$\text{nsinα = sinβ}$
since the refractive index of the rod 20 is n.

The line KP can be represented by the following equation.$\text{Y = tan(α+ϑ-β){X - Rcos(α+ϑ)} + Rsin(α+ϑ)}$

Where$\frac{\text{-g}}{\text{sinα}} \text{=} \frac{\text{R}}{\text{sinϑ}}$$\text{∴sinα = -} \frac{\text{g}}{\text{R}} \text{sinϑ cosα =} \sqrt{\text{1 -} \frac{\text{g²}}{\text{R²}} \text{sin²ϑ}}$$\text{sinβ = -} \frac{\text{gn}}{\text{R}} \text{sinϑ cosβ =} \sqrt{\text{1 -} \frac{\text{g²n²}}{\text{R²}} \text{sin²ϑ}}$

The coordinate value of the point K where the line KP intersects with the X axis is (k, 0), and the value k can be calculated as the value of X (= k) when Y = 0 in the equation (9).$\text{k = Rcos(α+ϑ) -} \frac{\text{Rsin(α+β)}}{\text{tan(α+ϑ-β)}}$

By dividing both sides of the equation (10) by (R),

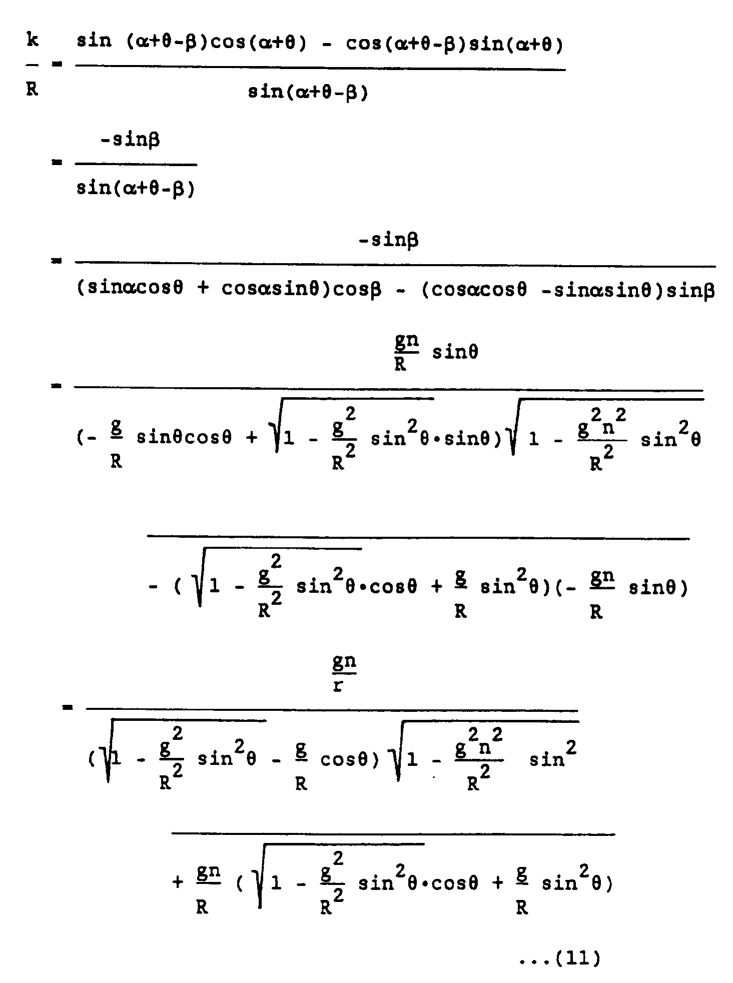

Assuming that g = -R/n in the equation (11),

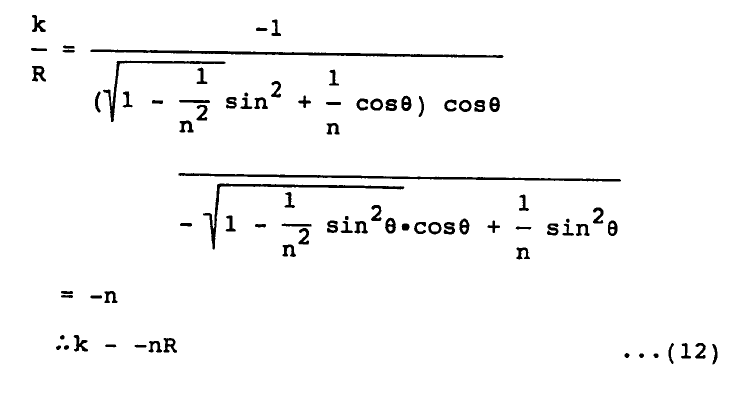

When g = -R/n, the coordinate of the point K, where the line KP intersects with the X axis, from the origin (O) is "-nR". This does not include the angle ϑ of the luminous flux with the X axis, so that the position of the point K is constant. More specifically, the optical paths of the light beams which are reflected from the point G and refracted at the peripheral surface of the rod 20 to be emitted are all converged to the point K.

Therefore, when the rod 20 is cut at a surface parallel to the Y axis including the point G which is spaced apart from the origin (O) by the distance "R/n", a narrow diffused reflection layer is formed in the direction of an axis passing through the point G and the light beams enter the end surface of the rod 20, then the light beams dispersed by the diffused reflection layer pass through the optical path reflected from the point K. Therefore, by condensing the reflected light by arranging a cylindrical lens 11 (or a linear Fresnel lens) in the succeeding stage of the rod 20, all light beams are converged on the point B on the optical axis. Consequently, the light can be condensed to a region narrower than in the prior art.

The distribution of illuminance of the transparent rod shaped linear light diffusion apparatus incorporating such a cylindrical lens will be described in the following. Referring to Fig. 13B, let us consider the illuminance on a surface (represented as a line in the figure) which is vertical to the X axis and passes through the point M on the X axis.

The following equations can be applied as in the foregoing.$\text{nsinα = sinβ}$$\text{k = -nR}$$\text{g = -} \frac{\text{R}}{\text{n}}$$\text{γ + β = α + ϑ}$$\text{h = (m - k)tanγ}$$\frac{\text{R}}{\text{sinϑ}} \text{=} \frac{\text{-g}}{\text{sinα}}$

By substituting the equation (18) with the equation (15),$\text{ϑ = β}$
by substituting the equation (16) with the equation (11),$\text{γ = α}$
by substituting the equation (13) with the equation (19),$\text{sinα =} \frac{\text{1}}{\text{n}} \text{sinϑ}$
accordingly,$\text{cosα =} \sqrt{\text{1 -} \frac{\text{1}}{\text{n²}} \text{sin²ϑ}}$
by substituting the equation (17) with the equation (20),$\text{h = (m - k)tanα}$
by substituting the above equation with the equation (21),$\text{h = (m -k) ·} \frac{\frac{\text{1}}{\text{n}} \text{sinϑ}}{\sqrt{\text{1 -} \frac{\text{1}}{\text{n²}} \text{sin²ϑ}}}$

If a uniform diffusion light source is at the point (g, 0), the optical energy emitted from the light source is proportional to the angle ϑ. Let us consider a small distance (Δh) in the direction of the Y axis at a point (the coordinate value is (m, h)) at which the illuminance is to be evaluated, assuming that the illuminance is uniform in the range of the distance Δh.

Assuming that the illuminance is proportional to the optical energy incident to a unit area, then the illuminance is proportional to (Δϑ/Δh) (where Δϑ is an increment of the angle ϑ corresponding to Δh).

Since 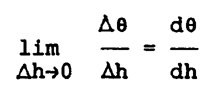
the illuminance at the point (m, h) is proportional to dϑ/dn.

Accordingly, the equation (22) can be transformed into$\frac{\text{dϑ}}{\text{dh}} \text{=} \frac{\text{1}}{\text{dh/dϑ}} \text{=} \frac{\text{n}}{\text{m-k}} \text{·} \frac{\text{(1 -} \frac{\text{1}}{\text{n²}} {\text{sin²ϑ)}}^{\text{3/2}}}{\text{conϑ}}$

Since the value of distribution of illuminance is a ratio of the above mentioned point and a point on the X axis (whose coordinate value being (m, 0)), therefore the ratio (I) of illuminance will be$\text{I =} \frac{\text{(1 -} \frac{\text{1}}{\text{n²}} {\text{sin²ϑ)}}^{\text{3/2}}}{\text{cosϑ}}$

The distribution of illuminance calculated in accordance with the equation (24) will be shown in the following.

When n = 1.5

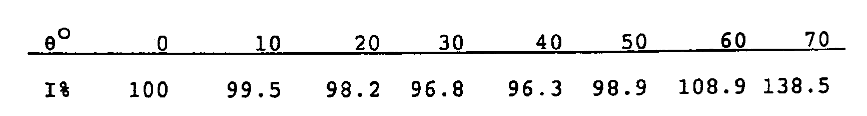

The distribution of illuminance of more than 96 % of the illuminance of the reference point is provided in the range of ϑ ≦ 50°. Therefore, this rod shaped linear light diffusion apparatus has superior characteristic as a surface light source.

When n = 1.8

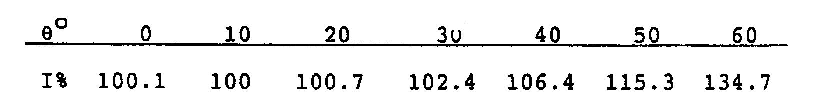

Namely, when the refractive index n of the transparent material constituting the cylindrical rod is no less than √3, the illuminance becomes minimum at the optical axis where ϑ = 0°, and it becomes brighter at the periphery.

Although the cylindrical rod is cut at a flat surface which is spaced apart from the central line by the distance of R/n and a linear diffused reflection layer is formed at the center thereof in the above described embodiment, the cross sectional shape of the rod may be changed.

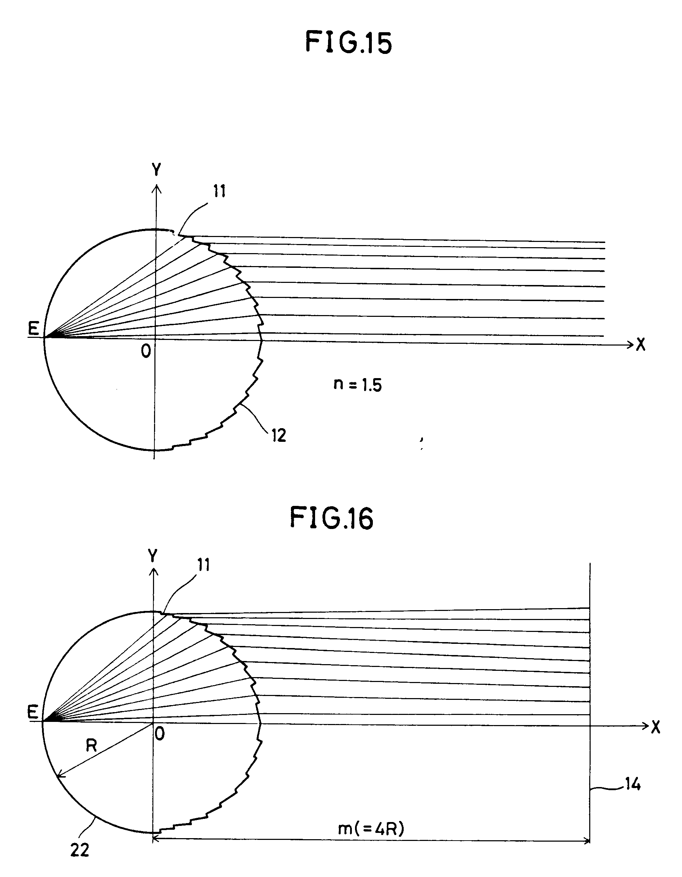

For example, the cross section may be a combination of a semicircle having the diameter of R in the right side of the Y axis and an isosceles triangle in the left side in which opposing ends in the Y axis of the semicircles and a point G which is spaced apart from the center O by the distance R/n are connected, and the diffused reflection layer may be provided at the point G, as shown in Fig. 14A. The cross section may comprise a curve connecting the point G with the opposing ends in the Y axis of the semicircle as shown in Fig. 14B.

If it is technically difficult to form the rod having the cross section such as shown in Fig. 14A or 14B with an integral transparent material, the semicircle in the right side and the triangle or the oval portion in the left side may be separately manufactured and thereafter they may be attached to each other by means of Canada Balsam or the like.

### (2) A Rod Shaped Linear Light Diffusion Apparatus Capable of Providing Parallel Luminous Fluxes

Fig. 15 illustrates an application of the first embodiment for linearly condensing light, in which the irregularly reflected light from the diffused reflecting layer 3 of the rod 12 are made parallel beams by means of the saw tooth shaped grooves 11.

This corresponds to a case where b = ∞ and therefore K = 0 in the above described equation$\text{K =} \frac{\text{Rsin2ϑ}}{\sqrt{{\text{b² - 2bRcos2ϑ + R}}^{\text{2,}}}}$$\text{∴tanγ =} \frac{\text{nsinϑ}}{\text{ncosϑ-1}}$

Therefore, by providing a transparent rod 12 with the angles of the surfaces of respective saw tooth shaped grooves defined in accordance with the above equation, the luminous fluxes reflected at the point E will be parallel luminous fluxes in the direction of the X axis as shown in Fig. 15. In the embodiment shown in Fig. 15, the refractive index of the transparent rod is n = 1.5 and the increment of the angle of the reflected luminous fluxes is 5°. In this case also, the increment of the angle can be arbitrarily set to be smaller.

### (3) A Rod Shaped Linear Light Diffusion Apparatus Capable of Providing Uniform Distribution of Illuminance

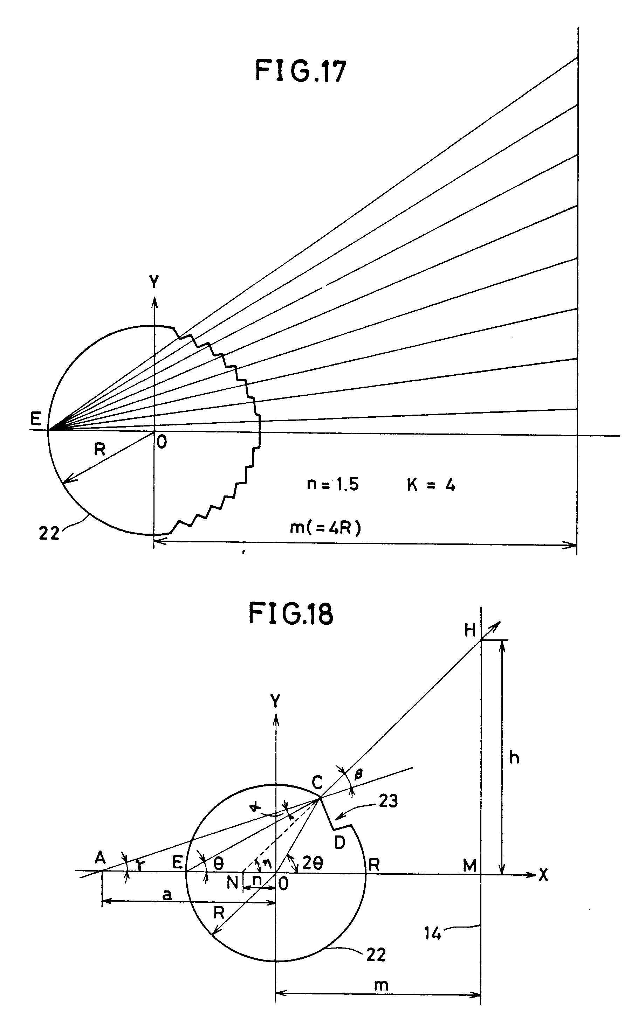

Figs. 16 and 17 show other applications of the transparent rod shaped linear light diffusion apparatus capable of linearly condensing light shown in the first embodiment, providing luminous fluxes whose distribution of illuminance is uniform.

Fig. 18 illustrates a principle of illumination of the surface shown in Figs. 16 and 17 with uniform distribution of illuminance.

Fig. 18 is a cross sectional view of a cylindrical rod 22 having a radius of R formed of a transparent material having the refractive index of n as in the above described embodiment in Fig. 5. In an X-Y coordinate system with the center O of the rod 22 being the origin, luminous fluxes incident to the end surface of the rod 22 are dispersed by a diffused reflection layer formed at the point E on the outer peripheral surface on the X axis.

At that portion on the peripheral surface of the rod 22 which is opposed to the point E, a plurality of saw tooth shaped grooves 23 are provided parallel to each other along the longitudinal direction.

As in Fig. 5, only one of the grooves 23 is shown in Fig. 18. The luminous fluxes from the point E are refracted at the point C to be projected on the point H on the surface 14 to be illuminated. In Fig. 18, the points corresponding to those in Figs. 5 and 13B are represented by the same reference characters, wherein
point A: an intersecting point of the normal of the CD surface at the point C and the X axis, having the coordinate value of (a, 0)
point N: an intersecting point of a dotted line which is the extension of the refracted luminous flux and the X axis, having the coordinate value of (n, 0) point C: point of refraction of the luminous flux
   CD: surface of the groove 23
point E: point of reflecting luminous flux having the coordinate value of (-R, 0)
point M: an intersecting point of the X axis and the surface 14 to be illuminated having the coordinate value of (m, 0)
point H: a point of projection of the luminous flux on the surface 14 to be illuminated having the coordinate value of (m, h)
   α: incident angle of the luminous flux at the point C
   β: angle of irradiation of the luminous flux at the point C
   γ: angle of the normal CA of the surface CD with the X axis
   η: angle of the refracted luminous flux CH (NC) with the X axis and
   ϑ: angle of the luminous flux from the point E with the X axis.

Now, the following relations can be applied.$\text{nsinα = sinβ}$$\text{γ = ϑ - α = η = β}$

Let us consider the distribution of illuminance at the surface 14 to be illuminated. The idea of the distribution of illuminance which will be described in the following is similar to that disclosed in (i) and (iii).

Referring to Fig. 19, let us assume that the point O represents a linear light source which is long enough in a direction vertical to the plane of the drawing. SL represents a surface to be illuminated positioned at a distance S from the point O. It is assumed that the linear light source emits light uniformly in all directions. The illuminance at the surface SL is uniform at any cross section in the direction vertical to the plane of the drawing, so that we may consider the illuminance on a segment SL at an arbitrary cross section.

When we consider only those of the luminous fluxes from the light source which are on the plane of the drawing, the illuminance at the point L is inversely proportional to the distance from the light source and is directly proportional to the cosine (cos) of the angle of the normal of the surface SL at the point L with the luminous flux.

In Fig. 19,$\text{tanϑ =} \frac{\text{h}}{\text{s}} \frac{\text{dϑ}}{\text{cos²ϑ}} \text{=} \frac{\text{dh}}{\text{s}} \frac{\text{dϑ}}{\text{dh}} \text{=} \frac{\text{cos²ϑ}}{\text{s}} \text{∴} \frac{\text{dϑ}}{\text{dh}} \text{=} \frac{\text{cosϑ}}{\text{(} \frac{\text{s}}{\text{cosϑ}} \text{)}}$

Where
cosϑ: a cosine of the angle of the normal of the SL surface with the luminous flux, and
s/cosϑ: distance between OL

Namely, the illuminance at the point L is directly proportional to dϑ/dh.

Therefore, the distribution of illuminance SL becomes uniform under the condition of$\frac{\text{dϑ}}{\text{dh}} \text{=} \frac{\text{1}}{\text{k}} \text{(k is a constant)}$
namely, h = kϑ.

Referring again to Fig. 18,$\text{tanη =} \frac{\text{h - Rsin2ϑ}}{\text{m - Rcos2ϑ}}$

By substituting h = kϑ$\text{tanη =} \frac{\text{kϑ - Rsin2ϑ}}{\text{m - Rcos2ϑ}}$$\text{η = tan⁻¹} \frac{\text{kϑ -Rsin2ϑ}}{\text{m - Rcos2ϑ}}$$\text{sinβ = sin(η+α-ϑ)} \text{= sin(η-ϑ)cosα + cos(η-ϑ)sinα}$$\text{nsinα = sin(η-ϑ)cosα + cos(η-ϑ)sinα} \text{{n-cos(η-ϑ)}sinα = sin(η-ϑ)cosα} \text{tanα =} \frac{\text{sin(η-ϑ)}}{\text{n - cos(η-ϑ)}} \text{α = tan⁻¹} \frac{\text{sin(η-ϑ)}}{\text{n -cos(η-ϑ)}} \text{γ = ϑ - α = ϑ - tan⁻¹} \frac{\text{sin(η-ϑ)}}{\text{n -cos(η-ϑ)}}$

In accordance with the equation (26), the angle γ of the normal AC of the surface CD of the saw tooth shaped groove 23 with the X axis at a point where the luminous flux reflected from the point E with the angle ϑ can be determined. By forming a plurality of saw tooth shaped grooves 23 in accordance with this value, the surface 14 to be illuminated which is vertical to the X axis can be illuminated with the uniform distribution of illuminance at a position spaced from the center O of the rod 22 by the distance m. The factor of the distance m of irradiation at the equation (26) is included in the data of the angle η shown in the equation (25).

Figs. 16 and 17 are cross sectional views showing embodiments of the transparent rod shaped linear light diffusion apparatus illuminating a surface to be illuminated with uniform distribution of illuminance, based on the above described theory. In both embodiments, the rod 22 has a refractive index of n = 1.5, the distance m between the center O of the rod and the surface 14 to be illuminated is m = 4R and the increment of the angle of the luminous flux reflected from the point E is 5°. In Fig. 16, the constant k = 1 and in Fig. 17, the constant k = 4.

In each of the embodiments shown in Figs. 16 and 17, the angle of the surface of the saw tooth shaped groove 23 formed on the surface from which the luminous fluxes are emitted is set based on the above described equation. By providing such grooves 23 on the transparent rod 22, the luminous fluxes reflected from the point E with equal increment of angle are projected on the surface to be illuminated 14 with a constant pitch. Therefore, uniform distribution of illuminance can be provided in the direction of the Y axis.

In the embodiments shown in Figs. 16 and 17, the increment of the angle of the luminous flux reflected from the point E is selected to be 5°. By setting smaller increment, the uniformity of the distribution of illuminance can be further improved.

If the rod is formed of a soft material such as an acrylic resin, a plurality of saw tooth shaped grooves can be provided on the peripheral surface of the transparent rod along the longitudinal direction by means of a diamond tool. If the rod is formed of a fragile material such as optical glass or quartz, and it is difficult to cut the saw tooth shaped grooves, then a flat plate of an acrylic resin may be applied on the peripheral surface of the rod and the grooves are formed in the plate.

As described above, according to the present invention, a transparent rod shaped linear light diffusion apparatus can be provided by making the cross sectional shape of the rod constituting the transparent rod shaped linear light diffusion apparatus saw tooth shape.

In addition, when the transparent rod shaped linear light diffusion apparatus in accordance with the foregoing embodiments of the present invention is used, no auxiliary optical system such as a cylindrical lens is required, so that the structure of a copying machine, a facsimile or a scanner such as a line sequential image scanner can be made simple and compact. The transparent rod shaped linear light diffusion apparatus of the present invention can be used as a general illuminating apparatus to provide desired illumination.

Although the present invention has been described and illustrated in detail, it is clearly understood that the same is by way of illustration and example only and is not to be taken by way of limitation, the scope of the present invention being limited only by the terms of the appended claims.

## Claims

1. Apparatus for establishing a predetermined illumination pattern, comprising :
- a rod member (2, 10) made of a transparent material for transmitting incident light in a first direction parallel to the axis (0) of said rod member (2, 10), said rod member (2) having a first end for receiving said incident light and a second end for reflecting said incident light, and
- a line-shaped diffusing means (3) provided on the surface of said rod member (2, 10) along said first direction for diffuse-reflecting said incident light,
characterized in that,
said rod member (2, 10) is cylindrical in shape, and has a plurality of saw tooth shaped grooves (11) for refracting and condensing said diffuse-reflected light formed on said rod member (2, 10) opposing to said diffuse means (3) parallel to the first direction, so that the diffuse-reflected light is refracted at the surfaces of said grooves, so as to form a predetermined pattern of luminous flux in a plane parallel to the axis of the rod.

2. Apparatus according to claim 1, characterized in that
each of said saw tooth shaped grooves has a first surface and a second surface,
said first surface being inclined with respect to a reference plane (EOAB) including the axis (O) of said rod member and the line on which said diffuse means (3) is provided,
the angle (γ) of the normal AC each first of surface (CD) with said reference plane being a predetermined angle.

3. Apparatus according to claim 2, characterized in that said angle γ satisfies the relation${\text{tan γ = ( n sin ϑ + k) / (n cos ϑ - (1 - k²)}}^{\text{1/2}} \text{)}$ wherein said rod member (2) has a refractive index of n, the angle (ϑ) between said reference plane (EOAB) and said incident light diffuse-reflected from said diffuse means (3) to said first surface is ϑ, and
the variable (k) is defined by a distance (OB) between a condensing line (B) and the axis of said rod member (2), whereby said first surface converges said diffuse-reflected light toward said condensing line (B) extending parallel to said first direction and being included in said reference plane (EOAB).

4. Apparatus according to claim 2, characterized in that said angle γ satisfies the relation$\text{tan γ = n sin ϑ / (n cos ϑ - 1)}$ wherein said rod member has the refractive index of n, and the angle between said reference plane and said incident light reflected from said diffusing means to said first surface is ϑ, so that parallel light is obtained.

5. Apparatus according to claim 2, characterized in that said angle γ satisfies the equation$\text{γ = ϑ - tan⁻¹ ( sin (η - ϑ) / (n - cos (η - ϑ))}$ wherein said rod member (22) has the refractive index of n, and the angle between said reference plane and said first surface is ϑ, and the variable η is defined by the equation$\text{η = tan⁻¹} \frac{\text{kϑ - Rsin2ϑ}}{\text{m - Rcos2ϑ}}$ wherein R is the radius of said rod member and m is the distance of illumination, so that light of uniform distrubution of illuminance can be obtained.

## Patentansprüche

1. Vorrichtung zum Erstellen eines vorbestimmten Beleuchtungsmusters, mit:
- einem Stabelement (2, 10) aus einem transparenten Material zum Transmittieren von auffallendem Licht in eine erste Richtung, die zu der Achse (0) des Stangenelements (2, 10) parallel ist, wobei das Stangenelement (2) ein erstes Ende zum Aufnehmen des auffallenden Lichtes und ein zweites Ende zum Reflektieren des auffallenden Lichtes hat, und
- einem linienförmigen Diffusionsmittel (3), das auf der Fläche des Stangenelements (2, 10) entlang der ersten Richtung angeordnet ist, um das auffallende Licht diffus zu reflektieren,
dadurch gekennzeichnet, daß
das Stangenelement (2, 10) in seiner Form zylindrisch ist und eine Mehrzahl von sägezahnförmigen Kerben (11) hat, um das diffus reflektierte Licht zu brechen und zu sammeln, ausgebildet auf dem Stabelement (2, 10) gegenüberliegend zu den Diffusionsmitteln (3) parallel zu der ersten Richtung, so daß das diffus reflektierte Licht an den Flächen der Kerben gebrochen wird, um so ein vorgegebenes Muster des Lichtflusses in einer Ebene parallel zu einer Achse der Stange zu bilden.

2. Vorrichtung nach Anspruch 1, dadurch gekennzeichnet, daß
jede der sägezahnförmigen Kerben eine erste Fläche und eine zweite Fläche hat,
wobei die erste Fläche bezüglich einer Bezugsebene (EOAB), die die Achse (0) des Stangenelements und die Linie, auf der das Diffusionsmittel (3) vorgesehen ist, einschließt, geneigt ist, und
der Winkel (γ) der Normalen AC jeder ersten Fläche (CD) mit der Bezugsebene ein vorgegebener Winkel ist.

3. Vorrichtung nach Anspruch 2, dadurch gekennzeichnet, daß der Winkel γ die Gleichung${\text{tan γ = (n sin ϑ + k) / (n cos ϑ - (1 - k²)}}^{\text{1/2}} \text{)}$ erfüllt, wobei das Stabelement (2) einen Refraktionsindex von n hat, der Winkel (ϑ) zwischen der Bezugsebene (EOAB) und dem auffallenden Licht, das von den Diffusionsmitteln (3) diffus reflektiert wird, mit der ersten Fläche ϑ ist, und
die Variable (k) durch einen Abstand (0B) zwischen einer Sammellinse (B) und der Achse des Stabelements (2) definiert ist, wodurch die erste Fläche das diffus konvergierte Licht in Richtung auf die Sammellinse (B) konvergiert, sich parallel zu der ersten Richtung erstreckend und in der Bezugsebene (EOAB) liegend.

4. Vorrichtung nach Anspruch 2, dadurch gekennzeichnet, daß der Winkel γ die Gleichung$\text{tan γ = n sin ϑ / (n cos ϑ - 1)}$ erfüllt,
wobei das Stangenelement den Refraktionsindex n hat und der Winkel zwischen der Bezugsebene und dem auffallenden Licht, das von dem Diffusionsmittel reflektiert wird, zu der ersten Fläche ϑ beträgt, so daß paralleles Licht gewonnen wird.

5. Vorrichtung nach Anspruch 2, dadurch gekennzeichnet, daß der Winkel γ die Gleichung$\text{γ = ϑ - tan⁻¹ (sin (η - ϑ) / (n - cos (η - ϑ))}$ erfüllt, wobei das Stabelement (22) den Refraktionsindex n hat und der Winkel zwischen der Bezugsebene und der ersten Fläche ϑ beträgt und die Variable η durch die Gleichung$\text{η = tan⁻¹} \frac{\text{kϑ - Rsin2ϑ}}{\text{m - Rcos2ϑ}}$ definiert wird, wobei R der Radius des Stabelements und m der Abstand der Beleuchtung ist, so daß Licht von gleichförmiger Verteilung der Helligkeit gewonnen werden kann.

## Revendications

1. Appareil destiné à établir un modèle d'éclairage prédéterminé, comportant :
- un élément en forme de tige (2, 10) réalisé dans une matière transparente afin de transmette la lumière incidente dans une première direction parallèle à l'axe (O) dudit élément en forme de tige (2, 10), ledit élément en forme de tige (2) ayant une première extrémité destinée à recevoir ladite lumière incidente et une deuxième extrémité destinée à réfléchir ladite lumière incidente, et
- des moyens de diffusion sous forme de ligne (3) prévus sur la surface dudit élément en forme de tige (2, 10) le long de ladite première direction afin de réfléchir avec diffusion ladite lumière incidente,
caractérisé en ce que
ledit élément en forme de tige (2, 10) est de forme cylindrique et possède plusieurs rainures en dent de scie (11) destinées à réfracter et condenser ladite lumière réfléchie avec diffusion formées sur ledit élément en forme de tige (2, 10) opposé aux dits moyens de diffusion (3) parallèlement à la première direction, de sorte que la lumière réfléchie avec diffusion est réfractée au niveau des surfaces desdites rainures, de façon à former un modèle prédéterminé de flux lumineux dans un plan parallèle à l'axe de la tige.

2. Appareil selon la revendication 1, caractérisé en ce que
chacune desdites rainures en dent de scie possède une première surface et une deuxième surface,
ladite première surface étant inclinée par rapport à un plan de référence (EOAB) comprenant l'axe (O) dudit élément en forme de tige et la ligne sur laquelle sont prévus lesdits moyens de diffusion (3),
l'angle (γ) de la normale AC de chaque première surface (CD) avec ledit plan de référence étant un angle prédéterminé.

3. Appareil selon la revendication 2, caractérisé en ce que ledit angle γ satisfait la relation${\text{tan γ = (n sin ϑ + k) / (n cos ϑ - (1 - k²)}}^{\text{1/2}} \text{)}$ ledit élément en forme de tige (2) ayant un indice de réfraction n, l'angle (ϑ) entre ledit plan de référence (EOAB) et ladite lumière incidente réfléchie avec diffusion par lesdits moyens de diffusion (3) sur ladite première surface étant ϑ, et
la variable (k) étant définie par une distance (OB) entre une ligne de condensation (B) et l'axe dudit élément en forme de tige (2), de sorte que ladite première surface fait converger ladite lumière réfléchie avec diffusion vers ladite ligne de condensation (B) qui s'étend parallèlement à ladite première direction et est incluse dans ledit plan de référence (EOAB).

4. Appareil selon la revendication 2, caractérisé en ce que ledit angle γ satisfait la relation$\text{tan γ = n sin ϑ / (n cos ϑ - 1)}$ ledit élément en forme de tige ayant l'indice de réfraction n, et l'angle entre ledit plan de référence et ladite lumière incidente réfléchie par lesdits moyens de diffusion sur ladite première surface étant ϑ, de sorte qu'une lumière parallèle est obtenue.

5. Appareil selon la revendication 2, caractérisé en ce que ledit angle γ satisfait l'équation$\text{γ = ϑ - tan⁻¹ (sin (η - ϑ)) / (n - cos (η - ϑ))}$ ledit élément en forme de tige (22) ayant l'indice de réfraction n, et l'angle (ϑ) entre ledit plan de référence et ladite première surface étant ϑ, et la variable η étant définie par l'équation$\text{η = tan⁻¹} \frac{\text{kϑ - Rsin2ϑ}}{\text{m - Rcos2ϑ}}$ R étant le rayon dudit élément en forme de tige et m étant la distance d'éclairage, de sorte qu'une lumière de distribution d'éclairage uniforme peut être obtenue.
